(19) Europäisches Patentamt
European Patent Office
Office européen des brevets

(11) **EP 4 395 147 A1**

(12) **EUROPEAN PATENT APPLICATION**

(43) Date of publication:
**03.07.2024 Bulletin 2024/27**

(21) Application number: **22217404.7**

(22) Date of filing: **30.12.2022**

(51) International Patent Classification (IPC):
**H02M 1/42** *(2007.01)*     **H02M 1/44** *(2007.01)*
**H02M 1/12** *(2006.01)*     **H02M 1/14** *(2006.01)*

(52) Cooperative Patent Classification (CPC):
**H02M 1/4225; H02M 1/0058; H02M 1/12;
H02M 1/14; H02M 1/4233; H02M 1/44**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Infineon Technologies Austria AG
9500 Villach (AT)**

(72) Inventors:
• **MENESES HERRERA, David
00540 Helsinki (FI)**
• **ESCUDERO RODRIGUEZ, Manuel
9500 Villach (AT)**
• **KUTSCHAK, Matteo-Alessandro
9072 Ludmannsdorf (AT)**

(74) Representative: **Westphal, Mussgnug & Partner,
Patentanwälte mbB
Werinherstraße 79
81541 München (DE)**

(54) **POWER CONVERTER**

(57)     A power converter and a method for operating a power converter are disclosed. The power converter includes: first and second input nodes (11, 12) configured to receive an input voltage (Vin), and first and second output nodes (13, 14) configured to provide an output voltage (Vout); a boost circuit (3; 3a) coupled between the first input node (11) and the first and second output nodes (13, 14) and comprising a boost inductor (33); a rectifier (2) comprising a first rectifier element (21) coupled between the second input node (12) and the first output node (13), and a second rectifier element (22) coupled between the second input node (12) and the second output node (14); and a ripple reduction circuit (4; 4a) coupled to the boost inductor (33) and coupled to one of the first and second input nodes (11, 12).

FIG 1

**Description**

This disclosure relates in general to a power converter, in particular a PFC power converter.

AC-DC power converters are widely used for power conversion purposes. An AC-DC power converter is configured to convert an alternating input voltage such as a power grid voltage into a regulated direct output voltage. A PFC power converter (briefly referred to as PFC converter in the following) is a specific type of AC-DC power converter which is not only configured to regulate the output voltage, but which is also configured to regulate a current waveform of an input current dependent on the waveform of the input voltage in order to improve the power factor.

A PFC converter may be operated in various ways. One way of operating a PFC converter is TCM (triangular current mode). In TCM, an electronic switch included in the PFC converter and connected in series with an inductor is operated in a PWM (pulse-width modulated) fashion in such a way that a current through the electronic switch, during an on-time of the electronic switch, changes its polarity. In this way, ZVS (zero voltage switching) of the electronic switch can be achieved. ZVS is desirable in view of achieving low switching losses of the electronic switch.

Operating a PFC converter in TCM, however, results in high current ripples of a current through the inductor connected in series with the electronic switch. High current ripples of the inductor current may cause EMI (electromagnetic interferences) in the power source, such as a power grid, providing the input voltage. In order to avoid or reduce EMI, an EMI filter may be connected between the power source and the PFC converter. Basically, the higher the current ripples the higher the filtering effort to comply with EMI regulations. More specifically, the higher the current ripples the larger the physical size of inductors and/or capacitors included in the EMI filter. Moreover, in TCM a switching frequency of the electronic switch may vary over one period of the alternating input voltage. Such varying switching frequency may also contribute to the complexity and size of the EMI filter.

It is desirable, in an AC-DC converter, such as a PFC converter, to reduce current ripples in an input current in order to be able to reduce the size of an EMI filter and, therefore, cost associated with the EMI filter.

One example relates to a power converter. The power converter includes first and second input nodes configured to receive an input voltage, first and second output nodes configured to provide an output voltage, a boost circuit, a rectifier, a control circuit, and a ripple reduction circuit. The boost circuit is coupled between the first input node and the first and second output nodes and includes a boost inductor. The rectifier includes a first rectifier element coupled between the second input node and the first output node, and a second rectifier element coupled between the second input node and the second output node. The control circuit is configured to control operation of the boost circuit, and the ripple reduction circuit is coupled to the boost inductor and to one of the first and second input nodes.

Another example relates to a method. The method includes, in a power converter, injecting a ripple current into an input configured to receive an input voltage to counteract current ripples in a current through a boost inductor coupled to the input. The power converter includes, an output configured to provide an output voltage, a boost circuit coupled between a first input node of the input and first and second output nodes of the output and including the boost inductor. The power converter further includes a rectifier including a first rectifier element coupled between the second input node and the first output node, and a second rectifier element coupled between the second input node and the second output node.

Examples are explained below with reference to the drawings. The drawings serve to illustrate certain principles, so that only aspects necessary for understanding these principles are illustrated. The drawings are not to scale. In the drawings the same reference characters denote like features.

Figure 1 illustrates one example of a power converter that includes a converter stage with a totem pole topology, and a ripple reduction circuit;

Figure 2 schematically illustrates waveforms of examples an input voltage, an input current and an output voltage of the power converter according to Figure 1;

Figure 3 illustrates one example of a rectifier of the power converter according to Fig- ure 1;

Figure 4 schematically illustrates timing diagrams of the input voltage, an inductor current, an inductor current threshold, and an average inductor current of the power converter according to Figure 1;

Figure 5 illustrates a switching frequency of a power converter of the type illustrated in Figure 1 at different load scenarios over one half-period of the input voltage when operated in TCM;

Figure 6 illustrates one example of an EMI filter;

Figure 7 illustrates, in the power converter according to Figure 1, one example of the ripple reduction circuit in greater detail;

Figure 8 shows timing diagrams that illustrate operation of a conventional power converter (that is, a power converter without ripple reduction circuit) when operated in TCM;

Figure 9 shows timing diagrams of the same signals as illustrated in Figure 8 in a power converter of the type illustrated in Figures 1 and 7 that includes a ripple reduction circuit;

Figures 10-14 illustrate various modifications of the power converters according to Fig- ures 1 and 7;

Figure 15 illustrates voltages across split capacitors during a transition of the input voltage;

Figures 16 illustrates one example for deactivating rectifier elements during transitions of the input voltage;

Figure 17 shows signal diagrams that illustrate a method for changing the charging states of split capacitors during a transition of the input voltage; and

Figure 18 shows signal diagrams that illustrate a modification of the method according to Figure 17.

In the following detailed description, reference is made to the accompanying drawings. The drawings form a part of the description and for the purpose of illustration show examples of how the invention may be used and implemented. It is to be understood that the features of the various embodiments described herein may be combined with each other, unless specifically noted otherwise.

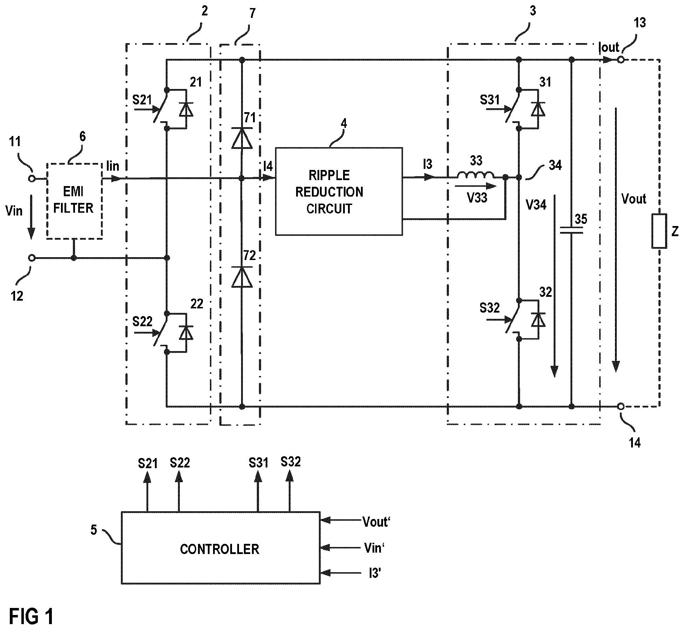

Figure 1 illustrates a power converter according to one example. The power converter includes input nodes 11, 12 configured to receive an input voltage Vin and output nodes 13, 14 configured to provide an output voltage Vout. The output voltage Vout may be received by a load Z (illustrated in dashed lines). The load Z may be any kind of load that is suitable to receive the output voltage Vout provided by the power converter. Examples of the load Z include, but are not restricted to, a further power converter, a battery, or the like.

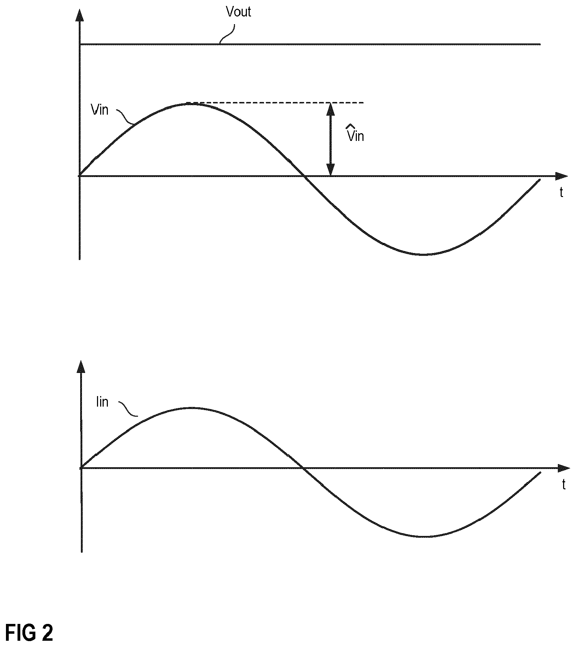

According to one example, the input voltage Vin is an alternating voltage, such as a sinusoidal grid voltage. A signal waveform of a sinusoidal input voltage Vin is schematically illustrated in Figure 2. The sinusoidal input voltage Vin alternatingly includes positive and negative half-periods. Figure 2 illustrates the sinusoidal input voltage Vin during one period, which includes on positive half-period and one negative half-period. A frequency of the input voltage Vin is 50 Hz or 60 Hz, for example. The input voltage Vin is a 230 $V_{RMS}$ or a 110 $V_{RMS}$ voltage, for example, so that an amplitude $\hat{V}$ in is 325 V or 155 V. The output voltage Vout is a direct voltage with a voltage level higher than the amplitude of the input voltage Vin, for example. According to one example, the voltage level of the output voltage Vout is selected from between 300 V and 450 V, in particular, from between 380 V and 420 V.

Referring to Figure 1, the power converter further includes a boost circuit 3. The boost circuit 3 includes an inductor 33 and is coupled between the first input node 11 and the first and second output nodes 13, 14. The inductor 33 of the boost circuit 3 is also referred to as boost inductor in the following. In addition to the boost inductor 33, the boost circuit 3 includes first and second electronic switches 31, 32 connected in series between the first and second output nodes 13, 14 and connected at a switch node 34. In the example illustrated in Figure 1, the first electronic switch 31 is connected between the switch node 34 and the first output node 13, and the second electronic switch 32 is connected between the switch node 34 and the second output node 14. The boost inductor 33 is connected to the switch node 34 and is coupled between the first input node 11 and the switch node 34.

Each of the first and second electronic switches 31, 32 is configured to receive a respective drive signal S31, S32 and is configured to switch on or off governed by the respective drive signal S31, S32.

Referring to Figure 1, each of the first and second electronic switches 31, 32 may include a switching element (that is controlled by the respective drive signal S31, S32) and a rectifier element connected in parallel with the switching element. The switching elements may be implemented as transistors, such as MOSFETs (Metal Oxide Semiconductor Field-Effect Transistors), IGBTs (Insulated Gate Bipolar Transistors) or GaN HEMTs (High Electron-Mobility Transistors). The rectifier element may be an integral part of the respective switching element or may be a discrete device in addition to the switching element. In a MOSFET, for example, an integrated body diode forms a rectifier element so that the rectifier element is an integral part of the switching element. According to one example, the first and second electronic switches 31, 32 are N-type MOSFETs.

The power converter further includes a rectifier 2 with a first rectifier element 21 connected between the second input node 12 and the first output node 13, and a second rectifier element 22 connected between the second input node 12 and the second output node 14. As illustrated in Figure 1, each of the first and second rectifier element 21, 22 may be implemented as an active rectifier element. In this example, the rectifier elements 21, 22 each include a switching element and a passive rectifier element, such as a diode connected in parallel with the switching element. Active rectifier elements may be implemented in accordance with one of the examples explained with reference to the first and second electronic switches 31, 32 herein before.

The active rectifier element 21, 22 illustrated in Figure 1 are configured to receive a respective drive signal S21, S22 that is configured to switch on or off the switching element in the respective rectifier element 21, 22.

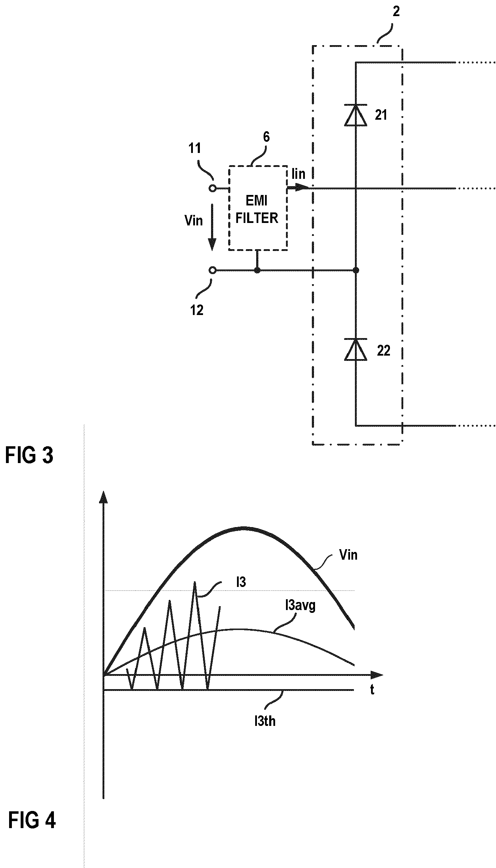

However, implementing the rectifier 2 with active rectifier elements is only an example. According to another example illustrated in Figure 3, the first and second rectifier elements 21, 22 are passive rectifier elements, such as diodes.

Furthermore, referring to Figure 1, the power converter includes a ripple reduction circuit 4 that is coupled to the boost inductor 33 and to at least one of the input nodes 11, 12. Details of the ripple reduction circuit 4 and its functionality are explained in detail herein further below.

Furthermore, the power converter includes a control circuit (controller) 5 that is configured to control operation of the boost circuit 3. More specifically, the controller 5 is configured to control operation of the first and second electronic switches 31, 32 in the boost circuit 3 by generating the drive signal S31, S32 received by the first and second electronic switches. According to one example, the control circuit 5 is configured to control operation of the boost circuit 3 in such a way that the output voltage Vout is regulated, which includes generating the output voltage Vout in such a way that a voltage level of the output voltage Vout essentially equals a predefined setpoint voltage level.

In the event that the rectifier elements 21, 22 included in the rectifier 2 are active rectifier elements, the control circuit 5 may also be configured to control operation of the active rectifier elements by generating the drive signals S21, S22 received by the active rectifier elements.

According to one example, the control circuit 5 is a PFC (power factor correction) control circuit (PFC controller), which is a control circuit that is not only configured to control operation of the boost circuit 3 such that the output voltage Vout is regulated, but is also configured to control operation of the boost circuit 3 such that a waveform of an average input current Iin received by the power converter corresponds to the waveform of the alternating input voltage Vin. The control circuit 5 may be configured to generate the waveform of the average input current Iin in such a way that the average input current Iin is in phase with the input voltage Vin. According to another example, the control circuit 5 generates the average input current Iin such that there is a predefined phase shift between the average input current Iin and the input voltage Vin. An example of an average input current Iin that is in phase with the input voltage Vin is also illustrated in Figure 2.

As will be explained in detail herein further below, the control circuit 5 is configured to operate one of the electronic switches 31, 32 in a PWM (pulse width modulated) fashion in order to regulate the output voltage Vout and control the waveform of the input current Iin. In the following, the one of the electronic switches 31, 32 operated in PWM mode in order to regulate the output voltage Vout and control the waveform of the input current Iin is referred to as "control switch" and the other one of the electronic switches 31, 32 is referred to as "rectifier switch". This is explained in detail herein further below. PWM operation of the one of the electronic switches 31, 32 may cause ripples of the input current Iin, wherein such ripples occur at the switching frequency of the electronic switches 31, 32, which is much higher than the frequency of the input voltage Vin. The "average input current" is the average of the input current Iin over at least one period of PWM operating the electronic switches 31, 32.

Referring to the above, regulating the output voltage Vout includes regulating the output voltage Vout such that the output voltage Vout has a predefined setpoint voltage level. For comparing the voltage level of the output voltage Vout with the setpoint voltage level, the control circuit 5 is configured to receive a measured output voltage Vout' that represents the voltage level of the output voltage Vout. The measured output voltage Vout' may be generated based on the output voltage Vout using any kind of voltage measurement circuit. A voltage measurement circuit is commonly known, so that no further explanation is required in this regard.

Furthermore, for controlling the current waveform of the input current Iin, the control circuit 5 may receive a measured input voltage Vin' that represents an instantaneous voltage level of the input voltage Vin, and a measured inductor current 13' that represents an average of the inductor current 13. The "average" is the average over one or more PWM drive periods of the control switch. Alternatively, the control circuit 5 may receive a measured input current Iin' instead of the measured inductor current 13'.

The topology with the boost circuit 3 and the rectifier 2 according to Fig- ure 1 is also known as bridgeless totem pole topology. In this type of topology, the control circuit 5 regulates the voltage level of the output voltage Vout and the waveform of the input current Iin by controlling an inductor current I33, which is a current through the boost inductor 33. Controlling the inductor current I33 includes controlling an inductor voltage V33 across the boost inductor 33. The inductor voltage V33 essentially equals the input voltage Vin minus a switch node voltage V34, which is the voltage at the switch node 34. Thus, controlling the inductor voltage V33 and, therefore, the inductor current I33 includes controlling the (average) switch node voltage V34, which is a voltage between the switch node 34 and the second output node 14.

Operating the at least one of the electronic switches 31, 32 in the PWM mode includes operating the respective electronic switch in a plurality of drive cycles and switching on the respective switch for a predefined on-time in each drive cycle and switching of the respective switch for a predefined off-time in each drive cycle. A duty cycle d of operating the at least one switch in the PWM mode is given by a duration Ton of the on-time divided by a duration T of the drive cycle,

$$d = \frac{Ton}{T} \qquad\qquad (1).$$

The average switch node voltage V34avg is the average of the switch node voltage of one drive cycle and is given by

$$V34avg = (1 - d) \cdot Vout \qquad\qquad (2).$$

The role of the first and second electronic switches 31, 32 in each drive cycle is dependent on the polarity of the input voltage Vin. During the positive half-period of the input voltage Vin, the second electronic switch 32 is the control switch and the first electronic switch 31 is the rectifier switch. During the negative half-period of the input voltage Vin, the first electronic switch 31 is the control switch and the second electronic switch 32 is the rectifier switch. When the control switch switches on, the switch node voltage V34 is essentially zero (V34=0), and when the control switch switches off the switch node voltage essentially equals the output voltage Vout (V34=Vout), so that the average switch node voltage V34avg is in accordance with equation (2).

During the positive half-period of the input voltage Vin, the inductor current I3 flows through the second electronic switch 32 during the on-time of the second electronic switch and through the first electronic switch 31 during the off-time of the second electronic switch 32. In both cases, the inductor current I3 flows through the second rectifier element 22 to the second input node 12. During the positive half-period of the input voltage Vin the average inductor current I3 is positive and flows in the direction illustrated in Figure 1. "Average inductor current I3" includes the average of the inductor current I3 over at least one PWM drive cycle.

During the negative half-period of the input voltage Vin the inductor current I3 flows through the first electronic switch 31 during the on-time of the first electronic switch 31 and flows through the second electronic switch 32 during the off time of the first electronic switch 31. In both cases, the inductor current I3 flows through the first rectifier element 21 to the second input node 12. During the negative half-period of the input voltage Vin the average inductor current I3 is negative and flows in the direction opposite the direction illustrated in Figure 1.

In case the first and second rectifier elements 21, 22 are active rectifier elements, the control circuit 5 is configured to (a) switch on the second rectifier element 22 and switch off the first rectifier element 21 during the positive half-period of the input voltage Vin, and (b) switch off the second rectifier element 22 and switch on the first rectifier element 21 during the negative half-period of the input voltage Vin. Such switching is not required when the rectifier elements 21, 22, as illustrated in Figure 3, are passive rectifier elements.

Referring to the above, at each time, one of the first and second electronic switches 31, 32 in the boost circuit 3 is the control switch and the other one of the first and second electronic switches is the rectifier switch. The control switch is operated in a PWM fashion. For this, the drive signal (S31 or S32) received by the control switch and generated by the control circuit 5 is a PWM drive signal.

According to one example, only the electronic switch acting as the control switch is operated in the PWM mode and the electronic switch acting as the rectifier switch is in the off-state (switched off) throughout the respective drive cycle, so that current is only conducted by the rectifier element included in the electronic switch acting as the rectifier switch. Thus, during the positive half-period of the input voltage Vin, for example, the second electronic switch 32 may be operated in the PWM, while the first electronic switch 31 is switched off throughout the positive half-period.

According to another example, the electronic switch acting as the rectifier switch is operated in the PWM mode in a complementary fashion to the electronic switch acting as the control switch. Thus, during the positive half-period of the input voltage Vin, for example, the second electronic switch 32 may be operated in the PWM mode, wherein the first electronic switch 31 switches on when the second electronic switch 32 switches off, and vice versa. In order to avoid a cross current there may be a dead time between switching off one of the first and second electronic switches 31, 32 and switching on the other one of the first and second electronic switches.

According to one example, the control circuit 5 is configured to control operation of the boost circuit 3 such that the power converter operates in TCM (triangular current mode). Operating the power converter in TCM includes controlling operation of the control switch in the boost circuit 3 such that the inductor current I3 changes polarity during the on-time of the control switch. In this way, a ZVS (zero voltage switching) operation of the rectifier switch can be achieved. (After the inductor current I3 has changed its direction an output capacitance of the rectifier switch is discharged, so that a voltage across the rectifier switch decreases to zero, which enables ZVS.)

Referring to Figure 1, the power converter optionally includes a bypass circuit 7 that is configured to bypass the boost circuit 3 when the magnitude of the input voltage Vin is higher than the output voltage Vout. The latter may occur during startup of the power converter before the output capacitor 35 has been charged to a voltage level that equals the amplitude of the input voltage Vin, or during normal operation (after startup) when a surge voltage (voltage spikes) occur at the input 11, 12. In this case, the output capacitor (at least partially) is charged directly via the bypass circuit 7.

The bypass circuit 7 may include a first rectifier element 71 connected between the first input node 11 and the first output node 13, and a second rectifier element 72 connected between the first input node 11 and the second output node 14. The first and second rectifier elements 71, 72 are diodes, for example. In this bypass circuit, the polarity of the first and second rectifier elements 71, 72 is such that first rectifier element 71 conducts a current, when the input voltage Vin is positive and the magnitude (absolute value) of the input voltage Vin is higher than the output voltage Vout and such that the second rectifier element 72 conducts a current when the input voltage Vin is negative and the magnitude of the input voltage Vin is higher than the output voltage Vout.

Figure 4 shows timing diagrams that illustrate operating the power converter in TCM. More specifically, Figure 4 schematically illustrates the inductor current I3, the average inductor current I3avg, and the input voltage during one portion of a period of the input voltage Vin. Operating the power converter in TCM includes adjusting, by the control circuit 5, the duty cycle d of the control switch dependent on the measured output voltage Vout' and the measured average inductor current I3' or the measured input current Iin' such that the output voltage Vout is regulated in accordance with the setpoint voltage level and the current waveform of the average input current Iin is in accordance with the input voltage Vin. Furthermore, operating the power converter in TCM includes switching on the control switch when the inductor current I3 has reached a predefined current threshold I3th, wherein the predefined current threshold I3th has a polarity opposite the polarity of the desired average inductor current I3avg, so that the inductor current I3 changes its polarity during the on-period and during the off-period of the control switch. During the positive half-period of the input voltage Vin, the average inductor current I3avg is positive, so that, as illustrated, the current threshold I3th is negative. Equivalently, during the negative half-period of the input voltage Vin, the average inductor current I3avg is negative, so that the current threshold I3th is positive (not illustrated in Figure 4). The current threshold I3th may be a respective fixed value in each of the positive and negative half-period. According to another example, the current threshold I3th may vary over the positive and negative half-periods.

According to one example, adjusting the duty cycle d and, therefore, controlling the on and off times of the control switch includes: (a) calculating a further current threshold I32th in addition to the current threshold I3th; (b) switching on the control switch each time the inductor current I3 reaches the current threshold I3th; and (c) switching off the control switch each time the inductor current I3 reaches the further current threshold I32th. The further current threshold I32th is calculated based on the current threshold I3th and the desired average inductor current such the average inductor current I3avg essentially equals the desired average inductor current. In this example, the inductor current I3 alternates in a triangular fashion between the current threshold I3th and the further current threshold I32th. This type of controlling the inductor current I3 by oscillating the inductor current I3 between the current threshold I3th and the further current threshold I32th may be referred to as hysteretic control.

Referring to the above, the control circuit 5 is configured to regulate the output voltage Vout and the waveform of the input current Iin by controlling the input current I3, wherein controlling the input current I3 includes controlling the inductor voltage V33 by controlling the switch node voltage V34. Controlling the switch node voltage V34 includes controlling the duty cycle d of the control switch in the series circuit including the first and second electronic switches 31, 32. Control circuits for controlling operation of a power converter with a totem pole topology in the way outlined above are known, so that no further, more detailed explanation is required in this regard.

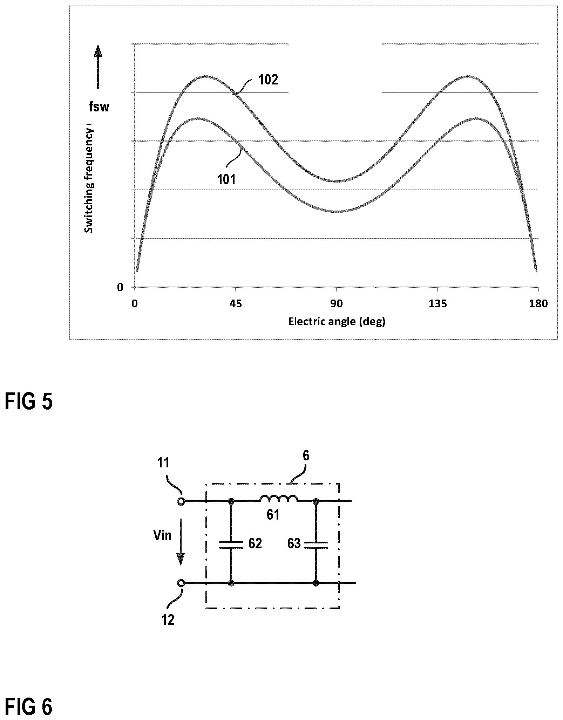

Operating the power converter in TCM may result in a varying switching frequency of the control switch. This is schematically illustrated in Figures 5, which illustrates the switching frequency fsw of the control switch in a PFC converter during one half-period of the input voltage Vin. The variation of the switching frequency is dependent on the RMS value of the input voltage Vin, for example. The waveform illustrated in Figure 5 is based on an example in which the RMS value of the input voltage Vin is 230$V_{RMS}$. In this example, the switching frequency fsw reaches a local minimum in the middle of the half-period (when the magnitude of the input voltage Vin reaches a maximum) and reaches a respective local maximum between the beginning and the middle of the half-period and between the middle and the end of the half-period. At the beginning and the end of each half-period, the switching frequency fsw decreases towards zero. The switching frequency variation is dependent on the average power received by the power converter and provided to the load by the power converter over one half-period of the input voltage. Basically, the higher the average output power provided to the load, the lower the maximum switching frequency that occurs. In Figure 5, curve 101 illustrates the frequency variation in a load scenario in which a maximum average output power is provided to the load. Curve 102 illustrates the frequency variation in a load scenario in which the average output power is 50% of the maximum output power.

Operating the power converter in the PFC mode includes that the input power varies at a frequency that is twice the frequency of the input voltage Vin. Such variations of the input power are filtered (buffered) by the output capacitor 35 of the boost circuit 3.

As can be seen from Figure 4, operating the power converter in TCM may result in high current ripples of the inductor current I3. Without taking further measures such current ripples would also occur in the input current Iin, because in this case the input current Iin would correspond to the inductor current I3. Conventionally, an EMI filter is connected between the input and the boost circuit in a PFC converter. The EMI filter is configured to prevent or at least reduce high current ripples.

Referring to Figure 1, in the PFC converter explained hereinabove, an EMI filter 6 (illustrated in dashed lines) may be connected between the input 11, 12 and the boost circuit 3. The EMI filter 6 may be implemented in a conventional way using one or more inductors and using one or more capacitors. Just for the purpose of illustration, one example of the EMI filter 6 is illustrated in Figures 6. Referring to Figure 6, the EMI filter 6 may include an inductor 61 connected between the first input node 11 and the boost circuit 3 (not illustrated in Figures 6). Furthermore, the EMI filter 6 may include a first capacitor 62 connected between a first circuit node of the inductor 61 and the second input node 12, and a second capacitor 63 connected between a second circuit node (different from the first circuit node) of the inductor 61 and the second input node 12.

Basically, the higher the current ripples that may occur, the higher the required inductance of the inductor 61 and the higher the required capacitances of the capacitors 62, 63 in order to sufficiently filter the current ripples. Thus, the higher the current ripples that may occur, the larger the physical size of the required EMI filter 6.

Referring to the above, the PFC converter according to Figure 1 further includes a ripple reduction circuit 4. The ripple reduction circuit 4 is coupled to the boost inductor 33 in the boost circuit 3. Furthermore, the ripple reduction circuit 4 is coupled to one of the first and second input nodes 11, 12, such as the first input node 11. The ripple reduction circuit 4 is configured to inject a ripple current into the input node it is coupled to, wherein the injected ripple current counteracts current ripples that may occur in the inductor current I3. To counteract current ripples in the inductor current I3, the ripple current injected by the ripple reduction circuit 4 has a phase shift of 180 degrees relative to the current ripples included in the inductor current I3. According to one example, an average of the ripple current injected by the ripple reduction circuit 4 is zero.

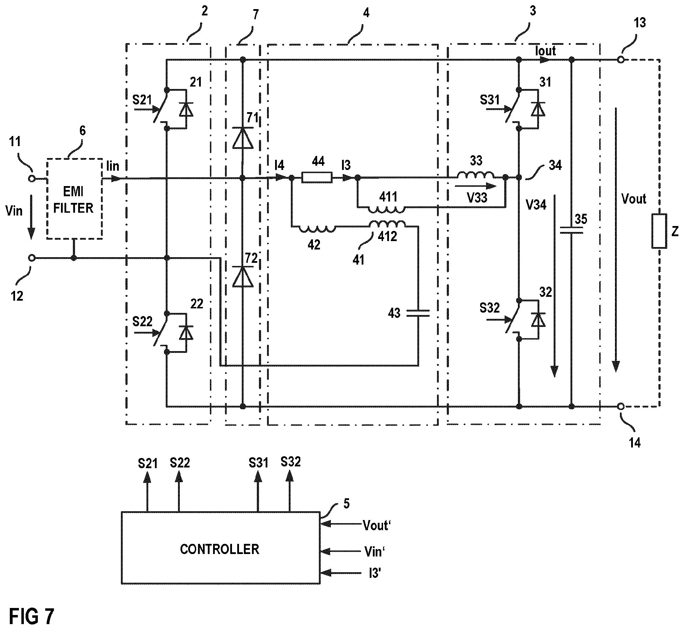

Figure 7 illustrates one example of the ripple reduction circuit 4 in greater detail. In this example, the ripple reduction circuit 4 comprises a transformer 41 with a primary winding 411 and a secondary winding 412, wherein the primary winding 411 is connected in parallel with the boost inductor 33. In this example, the inductor current I3 is the current through the parallel circuit including the boost inductor 33 and the primary winding 411 of the transformer 41, and the inductor voltage V33 is the voltage across the parallel circuit with the boost inductor 33 and the primary winding 411 of the transformer.

Referring to Figure 7, a secondary winding 412 of the transformer 41 is connected to an LC circuit that includes an inductor 42 and a capacitor 43. A series circuit including the LC circuit and the secondary winding 412 of the transformer 41 is coupled to the first input node 11 and is configured to inject a current counteracting the current ripples into the first input node 11. For this, the series circuit is connected between the first input node 11 and the second input node 12 in the example illustrated in Figure 7.

Referring to the above, regulating the voltage level of the output voltage Vout and the waveform of the input current Iin may include sensing the input current Iin and/or the inductor current I3. Sensing the input current Iin and/or the inductor current I3 may include sensing the voltage across a current sensor resistor that is connected to one of the input nodes 11, 12. Just as an example, in the power converter according to Figure 7, a current sense resistor 44 is connected between the first input node 11 and the boost inductor 33. This, however, is only an example. The current sense resistor 44 could be arranged at any other position in the power converter at which the input current Iin or the inductor current I3 is available.

In the following, Lm denotes the inductance of the boost inductor 33 and Ls denotes the inductance of the inductor 42 connected in series with the secondary winding 412 of the transformer 41. Inductor 42 is also referred to as the series inductor in the following. Furthermore, n denotes the turns ratio (winding ratio) between the number N1 of turns of the primary winding 411 and the number N2 of turns ratio of the secondary winding 412,

$$n = \frac{N1}{N2} \qquad (3).$$

According to one example, the inductance Ls of the series inductor 42 is selected dependent on the inductance Lm of the boost inductor 33 and the turns ratio n as follows

$$Ls = \frac{1}{n} \cdot \left(1 - \frac{1}{n}\right) \cdot Lm \qquad (4).$$

As can be seen from equation (4) the required inductance Ls of the series inductor 42 can be reduced by increasing the winding ratio n.

According to one example, the series inductor 42 is a discrete device in addition to the transformer 41. According to another example, the series inductor 42 is formed by a parasitic inductance such as a stray inductance of the transformer.

In a power converter of the type illustrated in Figure 7, an equivalent inductance Leq, which is the inductance that governs the increase of the inductor current I33 when the control switch is switched on and the decrease of the inductor current I33 when the control switch is switched off, is dependent on the inductance Lm of the boost inductor 33, the winding ratio n of the transformer 41, and the inductance Ls of the series inductor 42. Given that the inductance Ls of the series inductor 42 is in accordance with equation (4), the equivalent inductance Leq is in accordance with

$$Leq = \left(1 - \frac{1}{n}\right) \cdot Lm \qquad\qquad (5).$$

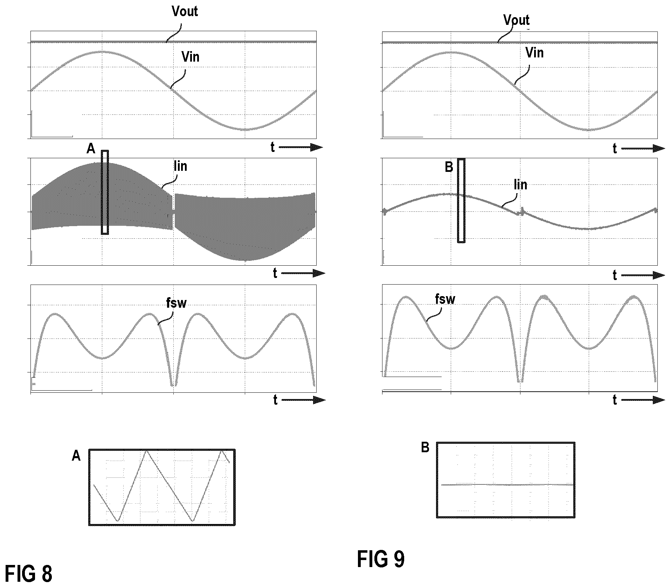

Figures 8 and 9 illustrate the improvement that can be achieved by implementing the PFC converter with a ripple reduction circuit 4. Figures 8 illustrates the input voltage Vin, the output voltage Vout, the input current Iin and the switching frequency fsw in a conventional PFC converter with TCM modulation that does not include a ripple reduction circuit, so that the input current Iin equals the inductor current I3. As can be seen from the detailed view A illustrated in Figure 8, the input current has an essentially triangular waveform in this case. The input current Iin illustrated in Figures 8 is the input current after the EMI filter. In order to reduce current ripples in the current provided by the power source a large EMI filter is required in the conventional PFC converter.

Figures 9 illustrates the input voltage Vin, the output voltage Vout, the input current Iin and the switching frequency in a PFC converter according to Figure 1 and 7 that includes a ripple reduction circuit of the type illustrated in Figure 7. As can be seen from Figure 9, current ripples in the input current Iin are significantly reduced as compared to the conventional PFC converter. Thus, the EMI filter may either be omitted or may at least significantly be reduced in size.

The curves illustrated in Figures 8 and 9 are based on simulations of a PFC converter in which the inductance Lm of the boost inductor is 20 µH, Lm=20 µH, and the winding ratio is n=6. Referring to the above, in a PFC converter operated in TCM the switching frequency, at a given average output power, varies over each half-period of the input voltage Vin. The frequency variation, in particular, the maximum switching frequency is dependent on the inductance Lm of the boost inductor 33 in a conventional PFC converter and is dependent on the equivalent inductance Leq in a PFC converter with the ripple reduction circuit. Basically, the switching frequency is inversely proportional to Lm in the conventional PFC converter and inversely proportional to Leq in the PFC converter with the ripple reduction circuit. As can be seen from equation (5) at a given inductance Lm of the boost inductor 33 the equivalent inductance Leq is smaller than the inductance Lm. Thus, as can be seen from Figure 9, the maximum switching frequency is higher in the PFC converter with the ripple reduction circuit then in the conventional PFC converter.

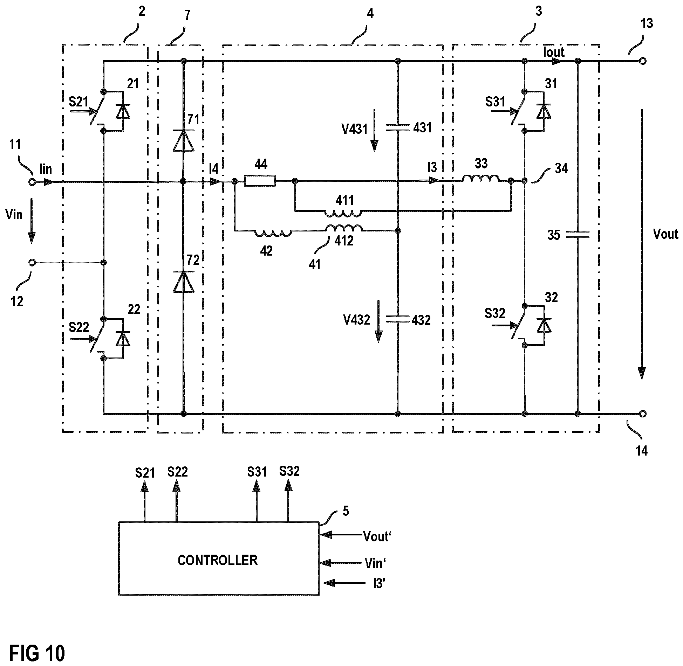

Various modifications of the PFC converter and the ripple reduction circuit are explained with reference to Figures 10-14 in the following. Each of these PFC converters includes at least one converter stage with a totem pole topology. Everything explained herein above with regard to operating the totem pole topology in TCM applies to the examples illustrated in Figures 10-14 accordingly. Furthermore, each of the rectifiers in the totem pole topologies according to Figures 10-14 includes active rectifier elements 21, 22. This, however, is only an example. It is also possible to implement these rectifiers with passive rectifier elements. The optional EMI filter 6 and the load Z are not illustrated in Figures 10-14.

In the ripple reduction circuit according to Figure 7, a voltage across the capacitor 43 has a polarity that is dependent on the polarity of the input voltage Vin. The input voltage Vin is an alternating voltage so that the capacitor 43 is an AC capacitor that is configured to sustain an alternating voltage.

Figure 10 illustrates a PFC converter with a ripple reduction circuit 4 that can be implemented with DC capacitors. In this example, a first capacitor 431 is connected between the series circuit including the secondary winding 412 and the series inductor 42 and the first output node 13. Furthermore, a second capacitor 432 is connected between the series circuit and the second output node 14. Each of these capacitors 431, 432 can be implemented as a DC capacitor. The first and second capacitors 431, 432 can be implemented in such a way that an overall physical size of the first and second capacitors 431, 432 can be smaller than the physical size of the one capacitor 43 in the example illustrated in Figure 7. The first and second capacitors 431, 432 are also referred to as split capacitors in the following.

Capacitances of capacitor 43 and of capacitors 431, 432 are, inter alia, dependent on a rated output power of the power converter. If the output power is about 200 W, for example, the capacitance of capacitor 43 is about 1 µF, and capacitances of capacitors 431, 432 are about 500 nF, for example.

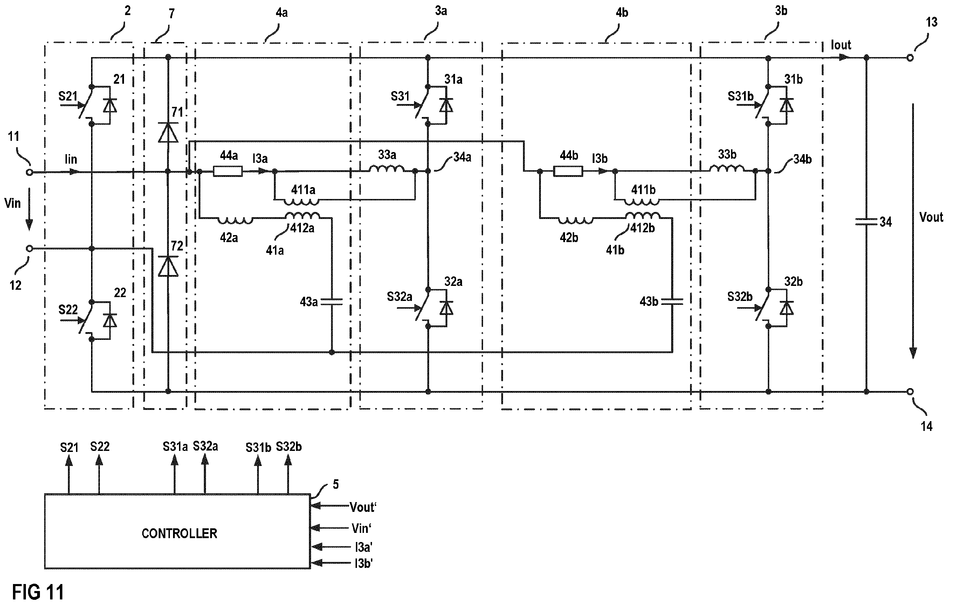

Figure 11 illustrates one example of a PFC converter that includes two converter stages each having a totem pole topology and each including a boost circuit 3a, 3b. The converter stages 3a, 3b share the rectifier 2 with the first and second rectifier elements 21, 22 that is connected between the second input node 12 and each of the first and second output nodes 13, 14. Each of the two boost circuits 3a, 3b is in accordance with the boost circuit explained with reference to Figure 1. In the boost circuits 3a, 3b according to Figure 11, the same elements as in the boost circuit 3 according to Figures 1 and 7 have the same reference numbers added by an "a" in a first boost circuit 3a and added by a "b" in the second boost circuit 3b. Each of the first and second boost circuits 3b, 3b includes a boost inductor 33a, 33b coupled between a respective switch node 34a, 34b and the first input node 11, a first electronic switch 31a, 31b connected between the respective switch node 34a, 34b and the first output node 13, and a second electronic switch 32a, 32b connected between the respective switch node 34a, 34b and the second output node 14.

Furthermore, each of the converter stages includes a respective ripple reduction circuit 4a, 4b. Each of these ripple reduction circuits 4a, 4b is implemented in accordance with the example illustrated in Figure 7. In the ripple reduction circuits 4a, 4b according to Figure 11, the same elements as in the ripple reduction circuit 4 according to Figure 7 have the same reference numbers added by an "a" in a first ripple reduction circuit 4a and added by a "b" in a second ripple reduction circuit 4b.

Referring to Figure 11, the first ripple reduction circuit 4a is coupled to the boost inductor 33a in the first boost circuit 3a, and the second ripple reduction circuit 4b is coupled to the boost inductor 33b in the second boost circuit 3b. Furthermore, each of the LC circuits included in the first and second ripple reduction circuits 4a, 4b is coupled between the first and second input nodes 11, 12.

In the power converter according to Figure 11, the control circuit 5 is configured to control operation of both the first and second converter stages. For this, the control circuit 5 is configured to provide drive signals S31a, S32a, S31b, S32b for each of the first and second electronic switches 31a, 32a, 31b, 32b in each of the first and second boost circuits 3a, 3b. In this power converter circuit, each of the first and second converter stages provides a portion of the output current Iout. The first and second converter stages may be implemented to provide essentially the same portion of the output current Iout or may be implemented to provide different portions of the output current Iout. According to one example, the control circuit 5 is configured to operate the first and second converter stages in an interleaved fashion. In a power converter with two converter stages operated in an interleaved fashion current ripples in the input current Iin can be reduced as compared to a power converter with only one converter stage and having the same output power. The control circuit 5, based on the measured output voltage Vout', the measured input voltage Vin', and the measured first and second inductor currents I3a', I3b', may be configured to calculate a desired average input current Iin and to adjust averages of the inductor currents I3a, I3b in the first and second boost circuits 3a, 3b in such a way that each of these boost circuits 3a, 3b receives a predefined portion of the desired average input current Iin in order to regulate the output voltage Vout and the waveform of the input current Iin. Operating two converter stages in a power converter in an interleaved fashion is known, so that no further, more detailed explanation is required in this regard.

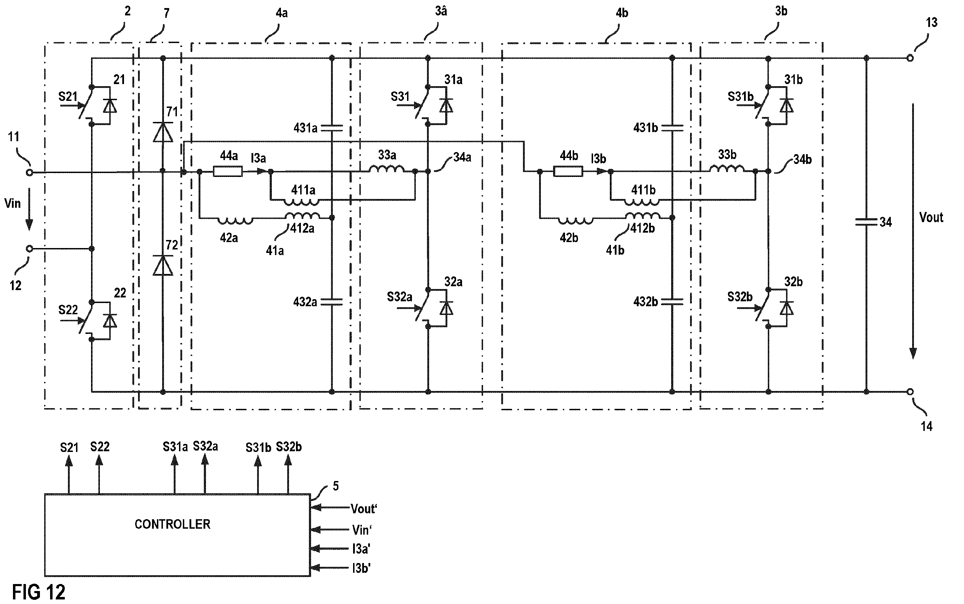

Figure 12 shows a modification of the power converter according to Figure 11. The power converter according to Figure 12 is different from the power converter according to Figure 11 in that the ripple reduction circuits 4a, 4b are in accordance with the example illustrated in Figure 10 and each include to capacitors 431a, 432a, 431b, 432b.

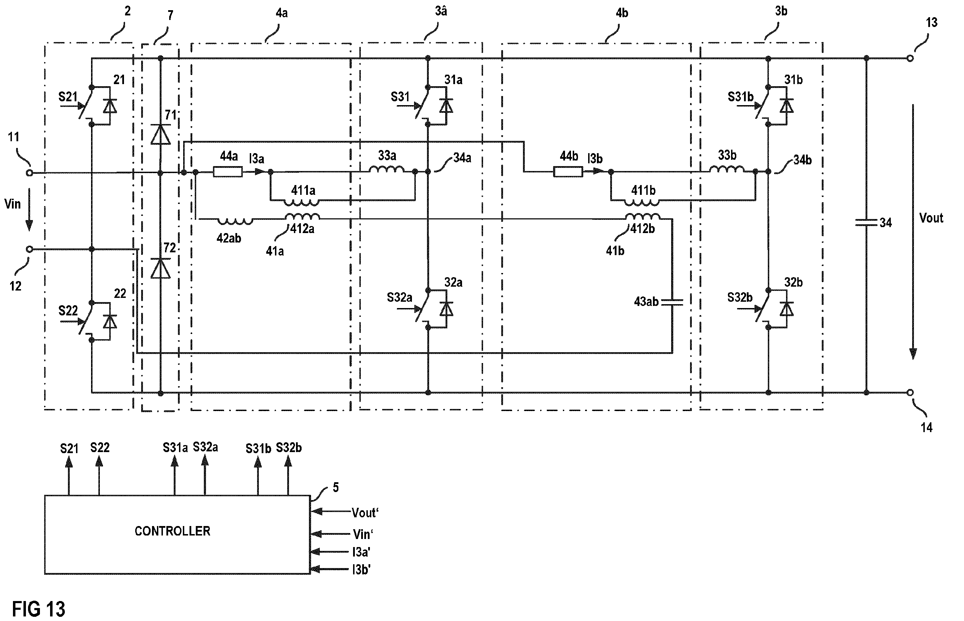

Figure 13 illustrates a further modification of the power converter according to Figure 11. In the power converter according to Figure 13, the ripple reduction circuits 4a, 4b share the series inductor 42ab and the capacitor 43ab. That is, the secondary windings 412a, 412b of the transformer 41a in the first ripple reduction circuit 4a and the transformer 41b in the second ripple reduction circuit 4b are connected in series with each other and are connected in series with the common series inductor 42ab and the common capacitor 43ab. The series circuit including the secondary windings 412a, 412b, the series inductor 42ab, and the capacitor 43ab are coupled between the first and second circuit nodes 11, 12.

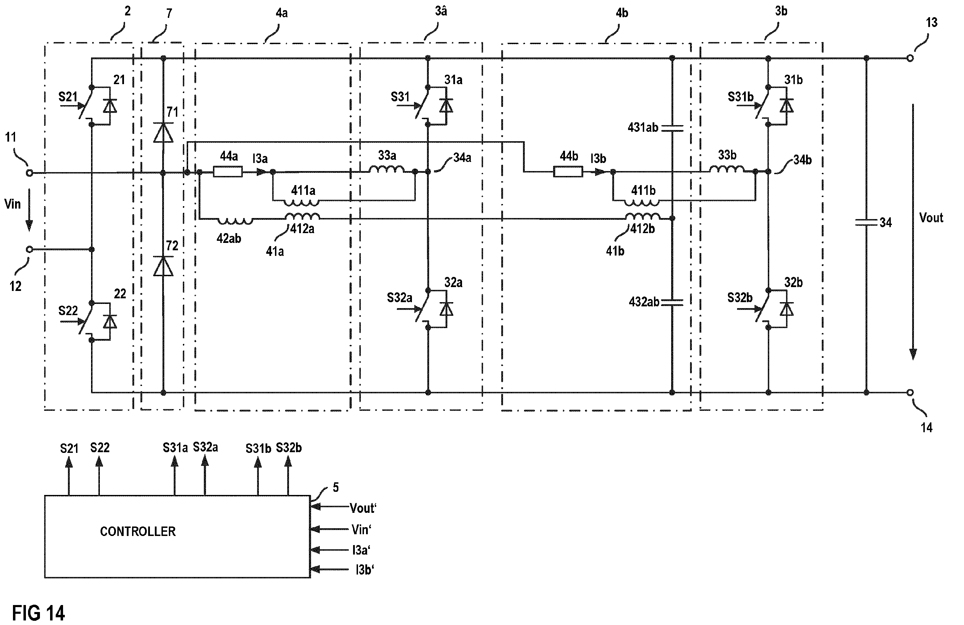

Figure 14 illustrates a modification of the power converter circuit according to Figure 13. In the power converter circuit according to Figure 14, the first and second ripple reduction circuits 4a, 4b include two common capacitors 431ab, 432ab instead of only one capacitor 43ab. The two common capacitors 431ab, 433ab are connected in series between the first and second output nodes 13, 14. Furthermore, a tap of the capacitor series circuit is connected to the series circuit including the secondary windings 412a, 412b of the transformers 41a, 41b and the common series inductor 42ab.

It should be noted that implementing the power converter with only one or two converter stages is only an example. It is also possible to implement the power converter with more than two converter stages of any of the types illustrated in Figures 11-14, wherein each of these converter stages may include a corresponding ripple reduction circuit.

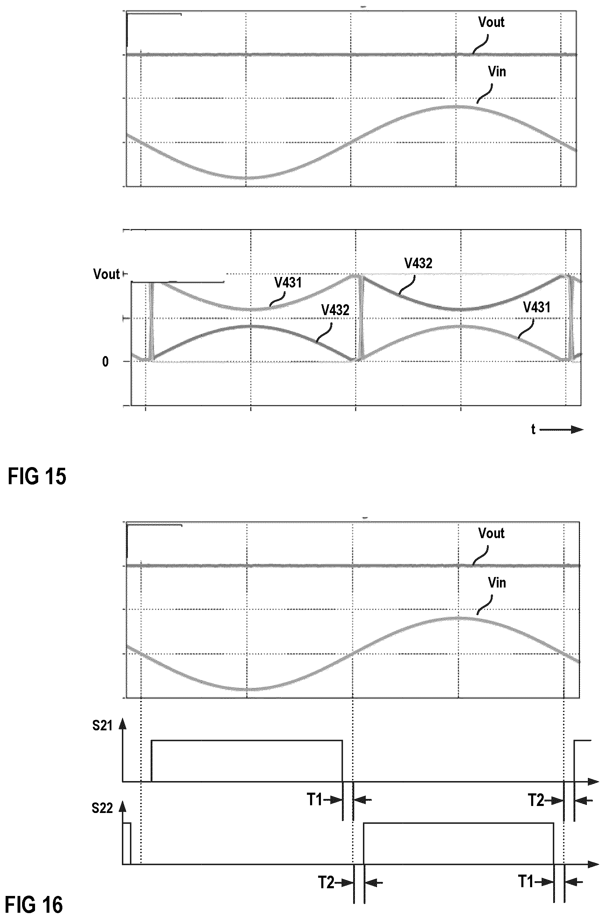

Referring to the above, the ripple reduction circuit 4, 4a, 4b may include a single capacitor, such as capacitors 43, 43a, 43b, or may include split capacitors, that is, a series circuit with a first capacitor, such as capacitor 431, 431a, 431b, and a second capacitor, such as capacitor 432, 432a, 432b, connected in series. In the implementation with split capacitors, an overall voltage across the capacitor series circuit equals the output voltage Vout. The voltage across the individual capacitors, however, varies over one period of the input voltage Vin. This is illustrated in Figure 15.

Figure 15 schematically illustrates timing diagrams of the input voltage Vin, the output voltage Vout, the voltage V431 across the first capacitor in the capacitors series circuit, and the voltage V432 across the second capacitor in the capacitor series circuit. The first capacitor voltage V431 can be the voltage across each of the first capacitors explained herein before, and the second capacitor voltage V432 can be the voltage across each of the second capacitors explained herein before. In the following, just for the purpose of explanation, it is assumed that the first capacitor voltage V431 is the voltage across the first capacitor 431 illustrated in Figure 10 and the second capacitor voltage Vout 432 is the voltage across the second capacitor 432 illustrated in Figure 10. In the following, voltage V431 is also referred to as first capacitor voltage, and voltage V432 is also referred to as second capacitor voltage.

As can be seen from Figure 15, during the negative half-period of the input voltage Vin, the first capacitor voltage V431 increases towards the end of the negative half-period to be finally essentially equal to the output voltage Vout. Furthermore, the second capacitor voltage V432 decreases towards the end of the negative half-period to be finally essentially zero. Towards the end of the positive half-period, the second capacitor voltage V432 increases to be finally essentially equal to the output voltage Vout, and the first capacitor voltage V431 decreases to be finally essentially zero.

As outlined above, during the negative half-period of the input voltage Vin, the first rectifier element 21 is conducting and the second rectifier element 22 is blocking, and, during the positive half-period of the input voltage Vin, the second rectifier element 22 is conducting and the first rectifier element 21 is blocking. Referring to the above, the first and second rectifier elements 21, 22 may be implemented as electronic switches. In this example, during the negative half-period of the input voltage Vin, the first rectifier element 21 is switched on and the second rectifier element 22 is switched off. Equivalently, during the positive half-period of the input voltage Vin, the second rectifier element 22 is switched on and the first rectifier element 21 is switched off.

Due to the change of the conducting states of the first and second rectifier elements 21, 22 during the transition from the negative half-period to the positive half-period of the input voltage Vin, and vice versa, a rapid change of the first and second capacitor voltages V431, V432 may occur. That is, a rapid change of the charging states of the first and second capacitors 431, 432 may occur. In the transition from the negative half-period to the positive half-period, the first capacitor voltage V431 decreases to zero and the second capacitor voltage V432 increases to the voltage level of the output voltage Vout. In the transition from the positive half-period to the negative half-period, the first capacitor voltage Vout 431 increases to the voltage level of the output voltage Vout and the second capacitor voltage V432 decreases to zero.

When the first and second rectifier elements 21, 22 are implemented as electronic switches and when these rectifier elements 21, 22 are switched over at the time instance when the input voltage Vin reaches zero, a current required to change the charging states of the first and second capacitors 431, 432 may be drawn from the power source connected to the input 11, 12. More specifically, for changing the charging states of the first and second capacitors a high input current Iin may be drawn (for a short time period) from the power source in the transition from the negative half-period to the positive half-period of the input voltage Vin, and vice versa. This may deteriorate the power factor achieved by the power converter, because in the transition between the positive and negative half-period the input current Iin should be rather low in order to achieve the desired proportionality between the input voltage Vin and the input current Iin.

High input currents in the transition between the positive and negative half-periods of the input voltage Vin can be avoided by implementing the first and second rectifier element 21, 22 as passive rectifier elements, such as diodes. Passive rectifier elements 21, 22 avoid a sudden voltage transition and, in particular, avoid that a high current is drawn from the input 11, 12 for changing the charging states of the first and second capacitors 431, 432.

Referring to the above, the first and second switches 31, 32 of the boost circuit 3 are operated in a PWM fashion in order to regulate the output voltage Vout. After the input voltage Vin has changed from the negative half-period to the positive half-period, or vice versa, such PWM operation of the first and second electronic switches 31, 32 has the effect that charge is transferred between the first and second capacitors 431, 432 via the ripple reduction circuit 4. In this way, the charging states of the first and second capacitors 431, 432 can change without drawing an additional current from the input 11, 12. This is explained in the following.

Referring to the above, when the input voltage Vin changes from the negative half-period to the positive half-period the voltage V431 across the first capacitor 431 essentially equals the output voltage Vout and is to be decreased to zero, and the voltage V432 across the second capacitor 432 essentially equals zero and is to be increased to the output voltage Vout. In this case, each time the first electronic switch 31 is in the on-state and the second electronic switch 32 is in the off-state, a current circulates in a first current loop that includes the first capacitor 431, the first electronic switch 31, the boost inductor 33, the resistor 44, the inductor 42 of the ripple reduction circuit 4, and the secondary winding 412 of the transformer 41 of the ripple reduction circuit 4. Due to this current, energy is stored in the inductors 33, 42, 412 of the first current loop.

When the first electronic switch 31 switches off, the current through the inductors 33, 42, 412 continues to flow due to the energy stored in the inductors 33, 42, 412, but then flows in a second current loop that includes the second electronic switch 32 and the second capacitor 432 in addition to the inductors 33, 42, 412. In this way, energy is transferred from the first capacitor 431 to the second capacitor 432 in each drive cycle of the first and second electronic switches 31, 32, so that finally the first capacitor 431 is discharged and the second capacitor 432 is charged.

When the input voltage Vin changes from the positive half-period to the negative half-period, the voltage V432 across the second capacitor 432 essentially equals the output voltage Vout and is to be decreased to zero, and the voltage V431 across the first capacitor 431 essentially equals zero and is to be increased to the output voltage Vout. In this case, each time the second electronic switch 32 is in the on-state and the first electronic switch 31 is in the off-state, a current circulates in the second current loop that includes the second capacitor 432, the second electronic switch 32, the boost inductor 33, the resistor 44, the inductor 42 of the ripple reduction circuit 4, and the secondary winding 412 of the transformer 41 of the ripple reduction circuit 4. Due to this current, energy is stored in the inductors 33, 42, 412 of the second current loop.

When the second electronic switch 32 switches off, the current through the inductors 33, 42, 412 continues to flow due to the energy stored in the inductors 33, 42, 412, but then flows in the first current loop via the first electronic switch 31 to charge the first capacitor 431. In this way, energy is transferred from the second capacitor 432 to the first capacitor 431 in each drive cycle of the first and second electronic switches 31, 32, so that finally the second capacitor 432 is discharged and the first capacitor 431 is charged.

Implementing the rectifier elements 21, 22 as passive rectifier elements, however, results in higher conduction losses than implementing the first and second rectifier elements 21, 22 as active rectifier elements, such as electronic switches. Higher conduction losses, however, are undesirable as they decrease the efficiency of the power converter.

According to one example, the first and second rectifier elements 21, 22 are implemented as electronic switches and, in order to avoid input current peaks during transitions between the positive and negative half-periods of the input voltage Vin, both the electronic switch forming the first rectifier element 21 and the electronic switch forming the second rectifier element 22 are switched off (deactivated) during the transition. This is illustrated in Figure 16.

Figure 16 schematically illustrates signal diagrams of the input voltage Vin and drive signals S21, S22 of the first and second rectifier elements 21, 22. Each of these drive signals S21, S22 has an on-level that switches on (activates) the respective rectifier element 21, 22 or an off level that switches off (deactivates) the respective rectifier element 21, 22. Just for the purpose of illustration, in the example shown in Figure 16, the on-level is a high signal level and the off-level is a low signal level.

As can be seen from Figure 16, in each transition from one of the positive and negative half-periods to the other one of the positive and negative half-periods, both rectifier elements 21, 22 are deactivated at the beginning of a first time period T1 before the input voltage Vin reaches zero and remain deactivated until the end of a second time period T2 after the input voltage Vin has reached zero, so that both rectifier elements 21, 22 are deactivated for a transition time period that is given by the first time period T1 plus the second time period T2. According to one example, an overall duration (T1+T2) for which the rectifier elements are deactivated is selected from between 100 $\mu$s and 300 $\mu$s. Furthermore, according to one example, the first time period T1 is shorter than the second time period T2.

Referring to the above, first and second rectifier elements 21, 22 implemented as electronic switches may each include a passive rectifier element. In this case, during the transition time period the situation is the same as in the example explained hereinabove in which the first and second rectifier elements 21, 22 are implemented as passive rectifier elements. Thus, during the transition time period, the charging state of the first and second capacitors 431, 432 changes, as explained above, due to the PWM operation of the first and second electronic switches 31, 32 of the boost circuit 3.

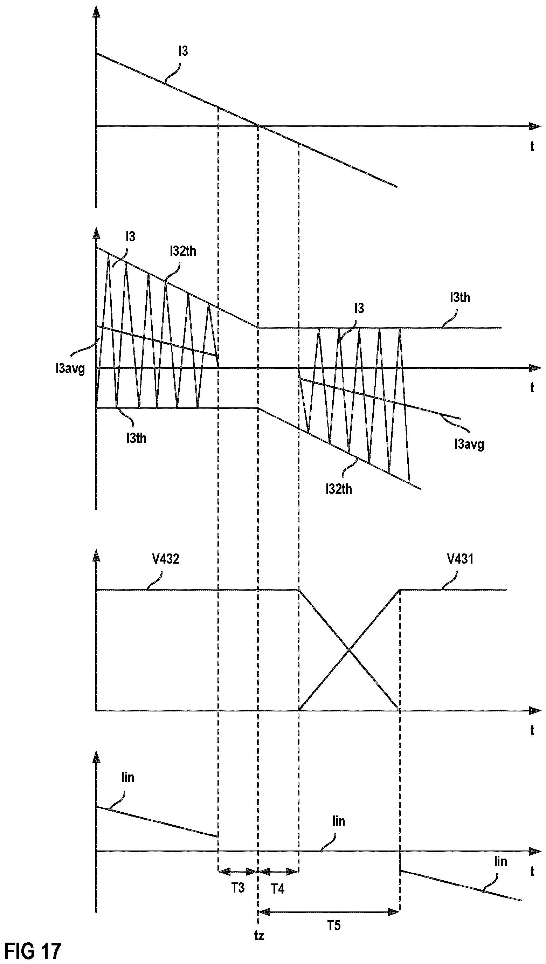

Changing the charging states of the first and second capacitors 431, 432 during the transition phase is schematically illustrated in Figure 17. More specifically, Figure 17 illustrates timing diagrams of the input voltage Vin, the inductor current I3, the first and second capacitor voltages V431, V432, and the (average) input current Iin. Just for the purpose of illustration, Figure 17 illustrates the transition from the positive half-period to the negative half-period of the input voltage Vin.

In Figure 17, tz denotes the time instance at which the input voltage Vin, in the transition from the positive half-period to the negative half-period, reaches zero. This time instance is referred to as zero crossing time instance in the following.

The signal diagrams illustrated in Figure 17 apply to both a scenario in which the first and second rectifier element 21, 22 are implemented as passive rectifier elements, and a scenario in which the first and second rectifier elements 21, 22 are active rectifier elements.

Referring to the above, in order to regulate the output voltage Vout and, at the same time, shape the waveform of the average input current I3avg, the first and second electronic switches 31, 32 of the boost circuit 3 are operated in a PWM fashion in such a way that the inductor current I3 oscillates between a current threshold I3th and a further current threshold I32th, wherein the current threshold I3th is selected such that ZVS can be achieved and the further current threshold I32th is selected dependent on the current threshold I3th and a desired average inductor current I3avg. According to one example, the current threshold I3th is negative during the positive half-period of the input voltage Vin and is positive during the negative half-period of the input voltage Vin. Equivalently, the further current threshold I32th is positive during the positive half-period during the positive half-period of the input voltage Vin in order to achieve a positive average inductor current I3avg, and the further current threshold I32th is negative during the negative half-period of the input voltage Vin in order to achieve a negative average input current I3avg. This is schematically illustrated in Figure 17.

As can be seen from Figure 17, the average inductor current I3avg is regulated such that its absolute value (magnitude) decreases towards the zero crossing time instance tz and such that its absolute value increases after the zero crossing time instance tz.

According to one example, the first and second electronic switches 31, 32 of the boost circuit 3 are operated such that PWM operation of the two switches stops a third time period T3 before the zero crossing time instance tz and again starts a fourth time period T4 after the zero crossing time instance tz. In this example, the absolute value of the average inductor current I3avg and the input current Iin drop to zero at the beginning of the third time period T3 and starts to increase at the end of the fourth time period T4.

According to one example, the third time period T3 equals the first time period, so that the first and second electronic switches 31, 32 of the boost circuit 31, 32 are deactivated at the same time instance at which the switches 21, 22 of the rectifier circuit 2 are deactivated.

Referring to Figure 17, when the first and second electronic switches 31, 32 resume PWM operation at the end of the fourth time period T4 the first and second capacitors 431, 432 have not yet changed their respective charging state. The charging states start to change, in the way explained above, when the first and second electronic switches 31, 32 are operated in a PWM fashion. Referring to Figure 17, during the time period in which the charging states of the first and second capacitors 431, 432 change, that is, during the time period in which the first capacitor voltage V 431 increases in the example illustrated in Figure 17 and the second capacitor voltage V432 decreases in the example illustrated in Figure 17, the inductor current I3 and the average inductor current I3avg are different from zero. During this time period, however, the inductor current I3 is only used to discharge the second capacitor 432 and charge the first capacitor 431. The input current Iin is zero during this time period and starts to increase after the charging states of the capacitors 431, 432 have changed.

Referring to Figure 17, the first and second capacitor voltages V431, V432 reach their desired voltage levels after a fifth time period T5 after the zero crossing time instance tz. According to one example, the duration of second time period T2 is selected such that during the second time period T2 the first and second capacitors 431, 432 significantly change their respective charging state. According to one example, "to significantly change the charging state" includes that the increasing voltage reaches at least a predefined portion of the final voltage level and the decreasing voltage decreases for a predefined portion of the initial voltage level. According to one example, the predefined portion is at least 50%, at least 70%, or at least 90% of the final voltage level or initial voltage level. An initial voltage level of the increasing voltage is zero, for example, and the final voltage level of the increasing voltage is the voltage level of the output voltage Vout, for example. The initial voltage level of the decreasing voltage is the voltage level of the output voltage Vout, for example, and a final voltage level of the decreasing voltage is zero, for example.

According to one example, the duration of the second time period T2 is fixed and selected dependent on measurements or simulations such that the charging states of the first and second capacitors 431, 432 significantly change during the second time period T2.

According to another example, the voltage V431, V432 across at least one of the first and second capacitors 431, 432 is monitored in order to define the time instance at which the second time period T2 ends and the first and second rectifier elements 21, 22 are activated. As the charging state of the capacitors 431, 432 change simultaneously, adjusting the duration of the second time period T2 may include monitoring the voltage across the capacitor with the increasing voltage or monitoring the voltage across the capacitor with the decreasing voltage. Adjusting the duration of the second time period T2 based on monitoring the decreasing voltage may include ending the second time period T2 when the decreasing voltage has decreased for the predefined portion of the initial voltage level. Equivalently, adjusting the duration of the second time period T2 based on monitoring the increasing voltage may include ending the second time period T2 when the increasing voltage has reached the predefined portion of the final voltage level.

According to one example, the second time period T2 equals the fifth time period (T2=T5), so that the electronic switches 21, 22 of the rectifier circuit 2 are activated after the first and second capacitor voltages V431, V432 have reached their desired voltage levels. In this example, the first and second capacitor voltages V431, V432 are monitored and the first and second electronic switches 21, 22 of the rectifier circuit are activated when monitoring the capacitor voltages V431, V432 reveals that voltages V431, V432 have reached their desired voltage levels.

According to another example, the second time period is fixed and selected such that it is longer than the expected fifth time period T5 for changing the charging state of the first and second capacitors 431, 432.

According to one example, the fourth time period T4 essentially equals the third time period T3.

In the example illustrated in Figure 17, the average inductor current I3avg is regulated in a conventional way. In this case, after the zero crossing time instance tz the average inductor current I3avg is rather low and increases towards the middle of the respective half-period of the input voltage Vin. However, using a low inductor current changing the charging state of the capacitors 431, 432 may take a rather long time.

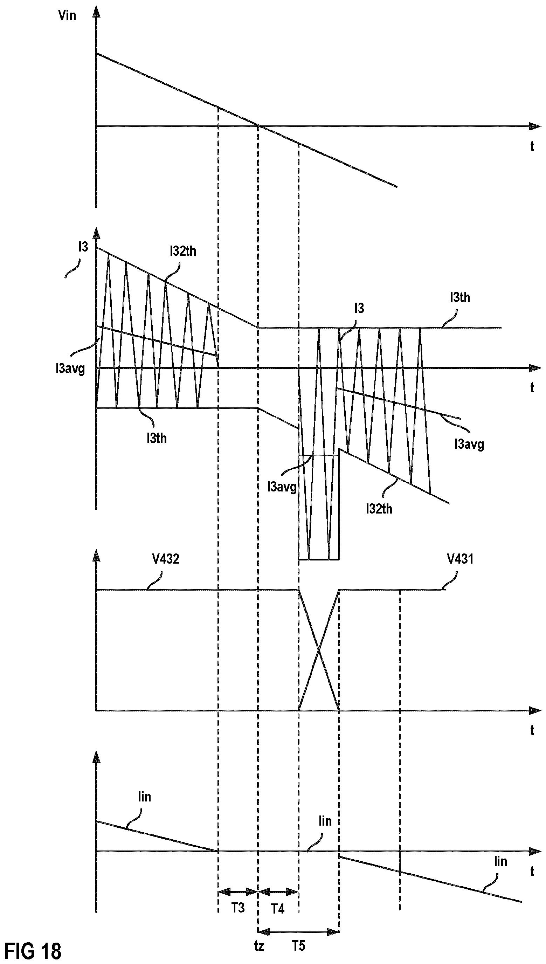

Figure 18 illustrates an improved way for changing the charging states of the first and second capacitors 431, 432. Figure 18 shows timing diagrams of the same signals as illustrated in Figure 17. In the example according to Figure 18, changing the charging state of the first and second capacitors includes increasing the absolute value of the average inductor current I3avg to a current level that is higher than required by the input voltage Vin and the output voltage Vout. However, as explained above, when the charging states of the capacitors 431, 432 change and the rectifiers 21, 22 are either passive rectifiers or are deactivated the current required to change the charging states of the first and second capacitors 431, 432 only flows internally in the power converter, so that the increased average inductor current I3avg has no effect on the input current Iin.

Referring to Figure 18, increasing the average inductor current may include adjusting the further current threshold 132th such that it has a predefined absolute value, wherein such absolute value is higher than the absolute value after the charging state of the capacitors 431, 432 have changed.

A time duration for which the average inductor current I3avg has an increased current level in order to accelerate the change of the charging state of the first and second capacitors 431, 432 may be fixed. According to another example, at least one of the first and second capacitor voltage is V431, V432 is monitored and the time duration with the increased average inductor current I3avg ends when the at least one of the first and second capacitor voltages has reached a predefined voltage level.

Some of the aspects explained hereinabove are briefly summarized in the following with reference to numbered examples.

Example 1. A power converter, including: first and second input nodes configured to receive an input voltage, and first and second output nodes configured to provide an output voltage; a boost circuit coupled between the first input node and the first and second output nodes and including a boost inductor; a rectifier including a first rectifier element coupled between the second input node and the first output node, and a second rectifier element coupled between the second input node and the second output node; and a ripple reduction circuit coupled to the boost inductor and coupled to one of the first and second input nodes.

Example 2. The power converter of example 1, wherein the ripple reduction circuit includes: a transformer with a primary winding and a secondary winding, wherein the primary winding is connected in parallel with the boost inductor; and an LC circuit connected to the secondary winding.

Example 3. The power converter of example 2, wherein the LC circuit includes an inductor and a single capacitor connected in series with the secondary winding and the inductor, wherein a series circuit including the single capacitor, the secondary winding, and the inductor is connected between the first and second input nodes.

Example 4. The power converter of example 2, wherein the LC circuit includes: a series circuit including the secondary winding and an inductor; a first capacitor connected between the series circuit and the first output node; and a second capacitor connected between the series circuit and the second output node, wherein the series circuit is further coupled to the first input node.

Example 5. The power converter circuit of examples 3 of 4, wherein the power converter further includes a resistor coupled between the first input node and the boost inductor.

Example 6. The power converter circuit of any one of examples 2 to 5, wherein the ripple reduction circuit further includes a further rectifier coupled between the first input node and the first and second output nodes.

Example 7. The power converter of example 1, wherein the boost circuit is a first boost circuit and the boost inductor is a first boost inductor, and wherein the power converter further includes a second boost circuit coupled between the first input node and the first and second output nodes and including a second boost inductor.

Example 8. The power converter of example 7, wherein the ripple reduction circuit is a first ripple reduction circuit, wherein the power converter further includes a second ripple reduction circuit coupled to the second boost inductor.

Example 9. The power converter circuit of example 8, wherein the first ripple reduction circuit includes a first transformer with a first primary winding and a first secondary winding, and a first LC circuit, and wherein the second ripple reduction circuit includes a second transformer with a second primary winding and a second secondary winding, and a second LC circuit.

Example 10. The power converter circuit of example 9, wherein the first ripple reduction circuit further includes a first capacitor connected in series with the first secondary winding and the first inductor, and wherein the second ripple reduction circuit further includes a second capacitor connected in series with the second secondary winding and the second inductor.

Example 11. The power converter circuit of example 9, wherein the first ripple reduction circuit further includes a first capacitor series circuit connected between the first and second output nodes and having a tap, wherein a series circuit including the first inductor and the first secondary winding is coupled between the tap of the first capacitor series circuit and the first input node, wherein the second ripple reduction circuit further includes a second capacitor series circuit connected between the first and second output nodes and having a tap, wherein a series circuit including the second inductor and the second secondary winding is coupled between the tap of the second capacitor series circuit and the first input node.

Example 12. The power converter circuit of example 9, wherein the first and second ripple reduction circuits include a common inductor and a common capacitor, wherein the common inductor and the common capacitor are connected in series with each other and in series with the first and second secondary windings.

Example 13. The power converter circuit of example 9, wherein the first and second ripple reduction circuits include a common inductor, wherein the first and second ripple reduction circuits include a common capacitor series circuit connected between the first and second output nodes and including a tap, wherein a series circuit including the common inductor and the first and second secondary windings is connected to the tap of the common capacitor series circuit.

Example 14. The power converter circuit of any one of examples 1 to 13, further including a control circuit configured to control operation of the boost circuit.

Example 15. The power converter of any one of examples 1 to 14, wherein the first and second rectifier elements are active rectifier elements each including an electronic switch and a passive rectifier element connected in parallel with the electronic switch.

Example 16. The power converter of any one of examples 4 to 15, wherein the control circuit is further configured to control operation of the first and second rectifier elements, and wherein to control operation of the first and second rectifier elements includes to deactivate the electronic switch of each of the first and second rectifier elements for a time period after a zero crossing of the input voltage.

Example 17. The power converter of example 16, wherein the duration of the time period is selected long enough for a voltage across one of the first and second capacitors to decrease at least for a predefined portion of an initial voltage level and/or for a voltage across the other one of the first and second capacitors to reach a predefined portion of a final voltage level.

Example 18. The power converter of any one of examples 1 to 14 wherein the first and second rectifier elements are passive rectifier elements.

Example 19. A method including: in a power converter, injecting a ripple current into an input configured to receive an input voltage to counteract current ripples in a current through a boost inductor coupled to the input, wherein the power converter further includes: an output configured to provide an output voltage; a boost circuit coupled between a first input node of the input and first and second output nodes of the output and including the boost inductor; and a rectifier including a first rectifier element coupled between the second input node and the first output node, and a second rectifier element coupled between the second input node and the second output node.

Example 20. The method of example 19, wherein injecting the ripple current into the input includes injecting the ripple current by a ripple reduction circuit coupled to the boost inductor.

Example 21. The method of example 19 or 20, wherein injecting the ripple current includes injecting the ripple current such that the ripple current has a phase shift of 180 degrees relative to the current ripples included in the current through the boost inductor.

Example 22. The method of any one of examples 19 to 21, wherein the first and second rectifier elements are active rectifier elements each including an electronic switch and a passive rectifier element connected in parallel with the electronic switch.

Example 23. The method of example 22, wherein the ripple reduction circuit includes a first capacitor and a second capacitor connected in series between the first and second output nodes, wherein the method further includes deactivating the electronic switch of each of the first and second rectifier elements for a time period after a zero crossing of the input voltage, and wherein the duration of the time period is selected long enough for a voltage across one of the first and second capacitors to decrease at least for a predefined portion of an initial voltage level and/or for the voltage across the other one of the first and second capacitors to reach a predefined portion of a final voltage level.

**Claims**

1. A power converter, comprising:

   first and second input nodes (11, 12) configured to receive an input voltage (Vin), and first and second output nodes (13, 14) configured to provide an output voltage (Vout);
   a boost circuit (3; 3a) coupled between the first input node (11) and the first and second output nodes (13, 14) and comprising a boost inductor (33);
   a rectifier (2) comprising a first rectifier element (21) coupled between the second input node (12) and the first output node (13), and a second rectifier element (22) coupled between the second input node (12) and the second output node (14); and
   a ripple reduction circuit (4; 4a) coupled to the boost inductor (33) and coupled to one of the first and second input nodes (11, 12).

2. The power converter of claim 1,

wherein the ripple reduction circuit (4; 4a) comprises:

a transformer (41; 41a) with a primary winding (411; 411a) and a secondary winding (412; 412a), wherein the primary winding (412; 412a) is connected in parallel with the boost inductor (33; 33a); and
an LC circuit connected to the secondary winding (412; 412a).

3. The power converter of claim 2,

wherein the LC circuit comprises an inductor (42; 42a) and a single capacitor (43; 43a) connected in series with the secondary winding (41; 41a) and the inductor (42; 42a),
wherein a series circuit including the single capacitor (43; 43a), the secondary winding (41; 41a), and the inductor (42; 42a) is connected between the first and second input nodes (11, 12).

4. The power converter of claim 2,
wherein the LC circuit comprises:

a series circuit comprising the secondary winding (412; 412a) and an inductor (42; 42a);
a first capacitor (431; 431a) connected between the series circuit and the first output node (13); and
a second capacitor (432; 432a) connected between the series circuit and the second output node (14),
wherein the series circuit is further coupled to the first input node (11).

5. The power converter circuit of claims 3 of 4,
wherein the power converter further comprises a resistor (44; 44a) coupled between the first input node (11) and the boost inductor (33).

6. The power converter circuit of any one of claims 2 to 5,
wherein the ripple reduction circuit (4; 4a) further comprises a further rectifier (45, 46) coupled between the first input node (11) and the first and second output nodes (13, 14).

7. The power converter of claim 1,

wherein the boost circuit is a first boost circuit (3a) and the boost inductor is a first boost inductor (33a), and
wherein the power converter further comprises a second boost circuit (3b) coupled between the first input node (11) and the first and second output nodes (13, 14) and comprising a second boost inductor (33b).

8. The power converter of claim 7,

wherein the ripple reduction circuit is a first ripple reduction circuit (4a),
wherein the power converter further comprises a second ripple reduction circuit (4b) coupled to the second boost inductor (33b).

9. The power converter circuit of claim 8,

wherein the first ripple reduction circuit (4a) comprises a first transformer (41a) with a first primary winding (411a) and a first secondary winding (412a), and a first LC circuit (42a, 43a), and
wherein the second ripple reduction circuit (4b) comprises a second transformer (41b) with a second primary winding (411b) and a second secondary winding (412b), and a second LC circuit (42b, 43b).

10. The power converter circuit of any one of the preceding claims, further comprising a control circuit (5) configured to control operation of the boost circuit (3).

11. The power converter of any one of claims 1 to 9,
wherein the first and second rectifier elements (21, 22) are active rectifier elements each comprising an electronic switch and a passive rectifier element connected in parallel with the electronic switch.

12. The power converter of any one of claims 4 to 11,

wherein the control circuit (5) is further configured to control operation of the first and second rectifier elements (21, 22), and

wherein to control operation of the first and second rectifier elements (21, 22) comprises to deactivate the electronic switch of each of the first and second rectifier elements (21, 22) for a time period (T2) after a zero crossing of the input voltage (Vin).

13. The power converter of claim 12,
wherein the duration of the time period (T2) is selected long enough for a voltage (V431, V432; V431a, V432a) across one of the first and second capacitors (431, 432; 431a, 432a) to decrease at least for a predefined portion of an initial voltage level and/or for a voltage (V431, V432; V431a, V432a) across the other one of the first and second capacitors (431, 432; 431a, 432a) to reach a predefined portion of a final voltage level.

14. A method comprising:

in a power converter, injecting a ripple current into an input (11, 12) configured to receive an input voltage (Vin) to counteract current ripples in a current (I3) through a boost inductor (33; 33a, 33b) coupled to the input (11, 12), wherein the power converter further comprises:

an output (13, 14) configured to provide an output voltage (Vout);
a boost circuit (3; 3a) coupled between a first input node (11) of the input (11, 12) and first and second output nodes (13, 14) of the output (13, 14) and comprising the boost inductor (33); and
a rectifier (2) comprising a first rectifier element (21) coupled between the second input node (12) and the first output node (13), and a second rectifier element (22) coupled between the second input node (12) and the second output node (14).

15. The method of claim 14,
wherein injecting the ripple current into the input comprises injecting the ripple current by a ripple reduction circuit (4; 4a) coupled to the boost inductor (33).

FIG 1

FIG 2

FIG 3

FIG 4

FIG 5

FIG 6

FIG 7

Vout

Vin

A

Iin

fsw

t

Vout

Vin

B

Iin

fsw

t

A

B

FIG 8

FIG 9

FIG 10

FIG 11

FIG 12

FIG 13

Vout

13 14

34

3b
31b 34b 32b
S31b S32b
33b

431ab 411b 412b 432ab
4b 41b
44b I3b

3â
31a 34a 32a
S31 S32a
33a

411a 412a
4a 41a
44a I3a 42ab

7
71 72

2
21 22
S21 S22

11 12
Vin

CONTROLLER  5

Vout' Vin' I3a' I3b'

S31b S32b
S31a S32a
S21 S22

**FIG 14**

FIG 15

FIG 16

FIG 17

FIG 18

Europäisches
Patentamt

European
Patent Office

Office européen
des brevets

# EUROPEAN SEARCH REPORT

Application Number

EP 22 21 7404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAE-WON YANG ET AL: "Bridgeless SEPIC Converter With a Ripple-Free Input Current", IEEE TRANSACTIONS ON POWER ELECTRONICS, INSTITUTE OF ELECTRICAL AND ELECTRONICS ENGINEERS, USA, vol. 28, no. 7, 1 July 2013 (2013-07-01), pages 3388-3394, XP011484386, ISSN: 0885-8993, DOI: 10.1109/TPEL.2012.2226607 | 1-3,5, 10,11, 14,15 | INV. H02M1/42 H02M1/44 H02M1/12 H02M1/14 |
| Y | * page 3388 – page 3389; figure 2 * | 4,6-9, 12,13 | |
| Y | HYUN-LARK DO: "Nonisolated Bidirectional Zero-Voltage-Switching DC DC Converter", IEEE TRANSACTIONS ON POWER ELECTRONICS, INSTITUTE OF ELECTRICAL AND ELECTRONICS ENGINEERS, USA, vol. 26, no. 9, 1 September 2011 (2011-09-01), pages 2563-2569, XP011383362, ISSN: 0885-8993, DOI: 10.1109/TPEL.2011.2111387 * page 2563 – page 2564; figure 3 * | 4 | |
| Y | ZHU KE ET AL: "1.5 kW single phase CCM totem-pole PFC using 650V SiC cascodes", 2016 IEEE 4TH WORKSHOP ON WIDE BANDGAP POWER DEVICES AND APPLICATIONS (WIPDA), IEEE, 7 November 2016 (2016-11-07), pages 90-94, XP033029823, DOI: 10.1109/WIPDA.2016.7799915 [retrieved on 2016-12-27] * page 90 – page 92; figures 1,4 * | 6 | |

TECHNICAL FIELDS SEARCHED (IPC)

H02M

-/--

The present search report has been drawn up for all claims

| Place of search | Date of completion of the search | Examiner |
|---|---|---|
| The Hague | 23 May 2023 | Gusia, Sorin |

EPO FORM 1503 03.82 (P04C01)

## EUROPEAN SEARCH REPORT

| | | Application Number |
|---|---|---|
| | | **EP 22 21 7404** |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/139505 A1 (REN YUANCHENG [CN] ET AL) 7 June 2012 (2012-06-07)<br>* figures 2, 15 *<br>* paragraph [0058] *<br>————— | 7-9,12, 13 | |

**TECHNICAL FIELDS SEARCHED (IPC)**

The present search report has been drawn up for all claims

| Place of search | Date of completion of the search | Examiner |
|---|---|---|
| The Hague | 23 May 2023 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 7404

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2023

| Patent document cited in search report | | Publication date | Patent family member(s) | | Publication date |
|---|---|---|---|---|---|
| US 2012139505 | A1 | 07-06-2012 | CN | 102035364 A | 27-04-2011 |
| | | | TW | 201234758 A | 16-08-2012 |
| | | | US | 2012139505 A1 | 07-06-2012 |

EPO FORM P0459

For more details about this annex : see Official Journal of the European Patent Office, No. 12/82